# EUROPEAN PATENT SPECIFICATION

(11) **EP 4 450 253 B1**
(45) Date of publication and mention of the grant of the patent: **21.01.2026**
(21) Application number: 24171291.8
(22) Date of filing: 19.04.2024
(51) Int. Cl.: B29C 49/00, C08L 25/06, B29C 49/06, B29C 49/10, B29C 49/02, B29K 67/00, B29K 79/00, B29K 91/00, B29K 105/26, B29K 279/00, B29L 31/00, C08J 3/22, C08K 5/29, C08L 91/06

(54) **STRETCH BLOW-MOLDED ARTICLE, TONER BOTTLE, AND METHOD FOR MANUFACTURING STRETCH BLOW-MOLDED ARTICLE, MOLDED ARTICLE, AND PELLET**
STRECKBLASGEFORMTER ARTIKEL, TONERFLASCHE UND VERFAHREN ZUR HERSTELLUNG EINES STRECKBLASGEFORMTEN ARTIKELS, FORMARTIKEL UND PELLET
ARTICLE MOULÉ PAR ÉTIRAGE-SOUFFLAGE, BOUTEILLE DE TONER ET PROCÉDÉ DE FABRICATION D'UN ARTICLE MOULÉ PAR ÉTIRAGE-SOUFFLAGE, ARTICLE MOULÉ ET PASTILLE

(30) Priority: 21.04.2023 JP 2023070051
(43) Date of publication of application: 23.10.2024
(73) Proprietor: CANON KABUSHIKI KAISHA, Tokyo 146-8501 (JP)
(72) Inventor: TOMITA, Toshiyuki, Tokyo, 146-8501 (JP); DOI, Yohei, Tokyo, 146-8501 (JP); ASHIBE, Tsunenori, Tokyo, 146-8501 (JP); KODAMA, Yasunori, Tokyo, 146-8501 (JP); YAGI, Kota, Tokyo, 146-8501 (JP)
(74) Representative: TBK

(56) References cited:
- EP-B1- 1 270 665
- WO-A1-2013/099876
- JP-A- 2011 219 604
- JP-A- 2018 193 471
- KR-A- 20160 131 051
- US-A1- 2009 258 982

## Description

### BACKGROUND OF THE INVENTION

### Field of the Invention

The present disclosure relates to a stretch blow-molded article, a toner bottle, and a method for manufacturing a stretch blow-molded article. Further, the present disclosure relates to a molded article and a pellet.

### Description of the Related Art

For an electrophotographic image forming apparatus, the toner bottle for supplying a toner, or the like is required to have the strength enough to prevent breakage even at the time of falling, or the like. For this reason, a molded article obtained by injection stretch blow molding of polystyrene such as impact-resistant polystyrene (high impact polystyrene, which may be hereinafter described as "HIPS".) of a styrene-based resin other than polyethylene terephthalate of a polyester resin is also often used. For example, Japanese Patent Application Publication No. H06-067536 discloses a container molded by blow molding using a polystyrene resin.

In recent years, from the viewpoint of environmental protection, after recovering a product of a thermoplastic resin, or a component thereof, the original shape is once changed, and regenerated for recycling. This has been widely performed. Herein, as the recycling method of a thermoplastic resin such as polystyrene, chemical recycle and material recycle are known as described in the paragraph [0002] of Japanese Patent Application Publication No. 2009-001693.

Chemical recycle requires a multistage step as disclosed in Japanese Patent Application Publication No. 2009-001693, and decomposition facilities and purification treatment facilities therefor become necessary, resulting in a high recycle cost. Further, the environmental load is also large.

On the other hand, for the polystyrene obtained by material recycle (which will be also hereinafter referred to as a "material recycled polystyrene", at the time of regeneration processing, polystyrene is applied with a shear stress under high temperatures, so that the polymer chain of polystyrene is partially cut, resulting in the reduction of the molecular weight. As a result, the problem of the reduction of the impact strength of the product, or the like becomes more likely to be caused. Further, use of polystyrene thus partially reduced in molecular weight results in mixing of low-molecular-weight polymers and high polymers in large amounts. For this reason, a variation in stretchability is caused at the time of stretch blow molding, so that blow molding defect becomes more likely to be caused.

As the method for making up for the defects of such a material recycled product, mention may be made of a method in which a material recycled material reduced in content of the material recycled product by mixing a larger amount of virgin materials than that of a plastic discarded material as described in the paragraph [0005] of Japanese Patent Application Publication No. 2005-162847, and other methods.
EP 1 270 665 B1 discloses a flame-retardant styrenic resin composition comprising, relative to 100 parts by weight of a resin composition comprising a styrenic resin (A) composed of at least a rubber-modified styrenic resin and a polyphenylene ether-series resin (B) in a ratio of the component (A) relative to the component (B) of 70/30 to 95/5 (weight ratio), 0.01 to 5 parts by weight of a polyethylene wax (C) and 5 to 20 parts by weight of an oligomeric aromatic phosphoric ester (D).
JP 2018 193471 A discloses a resin composition containing, based on (A) 100 pts.wt. of a resin component containing 30-100 wt.% of a polyphenylene ether resin (a1) and 70-0 wt.% of a styrenic resin (a2), (B) 5-30 pts.wt. of a compound represented by formula (1) and (C) 0.2-5 pts.wt. of a component. The component (C) contains (C1) hydrotalcite and (C2) a carbodiimide compound.
US 2009 0258982 A1 discloses a biodegradable resin and a molded body formed therewith. The biodegradable resin composition comprises 100 parts by mass of a biodegradable polyester resin and 0.1-15 parts by mass of a jojoba oil and/or a polar wax. The biodegradable polyester resin may contain not less than 50% by mass of a plant-based resin. Polylactic acid can be used as the plant-based resin.
JP 2011 219604 A discloses a polylactic acid resin composition including: a polylactic acid resin (A) in which a content of a D-form is ≤ 1.0 mol%, or ≥ 99.0 mol%; and a carbodiimide compound (B), wherein in the polylactic acid resin composition, a content of the polylactic acid resin (A) is ≥ 50 mass%, and a content of the carbodiimide compound (B) is 0.1-10 mass%.
KR 2016 0131051 A discloses a use of an additive as an oxygen scavenger in a plastic material, wherein said plastic material is a polyester, a polyolefin, a polyolefin copolymer or polystyrene, said additive being a light stabilizer and optionally a transition metal compound.
WO 2013 099876 A1 discloses a 4-methyl-1-pentene/olefin (co)polymer composition; a molded body which is formed from the composition; and a hollow molded body which is formed from the composition. A 4-methyl-1-pentene (co)polymer composition therein disclosed contains (A) a specific 4-methyl-1-pentene (co)polymer and (B) a specific 4-methyl-1-pentene/α-olefin copolymer at a specific ratio.

### SUMMARY OF THE INVENTION

However, when a larger amount of virgin materials than that of the plastic discarded materials are mixed to reduce the reusage rate, the use ratio of the recycled material is reduced. For this reason, an improvement is required for conforming to the recycling community.

Further, a step of cleaning a bottle is generally performed in material recycle. However, cleaning of a bottle may be performed using water, an acid, an alkali, or the like a plurality of times, and further, a drying step also becomes necessary. For this reason, the cleaning of a bottle can also increase the environmental load.

According to the study by the present inventors, the material recycled polystyrene (which will be also hereinafter referred to as a "material recycled HIPS" or a "MR-HIPS") as the resultant product of the material recycle of a blow bottle as a toner container made of the recovered HIPS may have been reduced in molecular weight as described previously.

The present inventors simplified or omitted cleaning of a toner bottle to be recycled, obtained a MR-HIPS from the toner bottle still including the toner adhered to the inside thereof, and manufactured a toner bottle using the MR-HIPS again from the viewpoint of the reduction of the environmental load. Then, the present inventors found the following. When a toner is accommodated in the toner bottle thus obtained, the surface of the toner particle may be deformed at the contact site between the toner in the toner bottle and the toner bottle inside surface. The toner particle with the deformed surface may cause faulty development, and the faulty development may cause image density non-uniformity in an electrophotographic image.

The reason why deformation is caused in the surface of the toner accommodated in the toner bottle molded using the MR-HIPS obtained from the toner bottle with the toner still adhered thereto is presumed by the present inventors as follows. Namely, it is considered that the toner bottle includes a wax included in the toner mixed therein. Then, it is considered that at least a part of the mixed wax is present on the surface inside the toner bottle. Then, it is considered that the contact between the toner accommodated in the toner bottle and the wax exposed to the surface inside the toner bottle deforms the surface of the toner particle. The deformation phenomenon of the toner particle surface due to the wax may be hereinafter referred to as chemical attack.

The present invention is defined by the features of the independent claims. At least one aspect of the present disclosure is intended for providing a stretch blow-molded article capable of preventing the transfer of the wax to the surface of the blow-molded article on the assumption that a styrene-based resin including a wax is used for the raw material. Further, at least one aspect of the present disclosure is intended for providing a toner bottle capable of preventing the degradation of the accommodated toner. Further, at least one aspect of the present disclosure is intended for providing a method for manufacturing a stretch blow-molded article capable of preventing the transfer of the wax to the surface of the blow-molded article on the assumption that a styrene-based resin including a wax is used for the raw material.

Further, at least one aspect of the present disclosure is intended for providing a molded article capable of preventing the transfer of the wax to the surface on the assumption that a styrene-based resin including a wax is used for the raw material. Still further, at least one aspect of the present disclosure is intended for providing a pellet to contribute to the suppression of the transfer of the wax to the surface of the molded article.

At least one aspect aims at a stretch blow-molded article as specified in claims 1 to 3.

At least one aspect provides a method for manufacturing the above stretch blow-molded article, as specified in claim 8.

In accordance with at least one aspect of the present disclosure, it is possible to obtain a stretch blow-molded article capable of preventing the transfer of a wax to the surface of the blow-molded article on the assumption that a styrene-based resin including a wax is used for the raw material. Further, in accordance with at least one aspect of the present disclosure, it is possible to obtain a toner bottle capable of preventing the degradation of the accommodated toner. Further, in accordance with at least one aspect of the present disclosure, it is possible to obtain a method for manufacturing a stretch blow-molded article capable of preventing the transfer of a wax to the surface of the blow-molded article on the assumption that a styrene-based resin including a wax is used for the raw material. Still further, in accordance with at least one aspect of the present disclosure, it is possible to obtain a molded article prevented in transfer of the wax to the surface. Still furthermore, at least one aspect of the present disclosure is intended for providing a pellet to contribute to the suppression of the transfer of the wax to the surface of the molded article. Further features of the present invention will become apparent from the following description of exemplary embodiments with reference to the attached drawings.

### BRIEF DESCRIPTION OF THE DRAWINGS

FIG. 1 is a schematic view of an image forming apparatus;
FIG. 2 is a schematic view showing a molding method of a preform;
FIG. 3 is a schematic view showing a blow molding method;
FIG. 4 is a schematic view of 1-stage process blow molding;
FIG. 5 is a schematic view showing the transfer of a wax component; and
FIG. 6 is a schematic view of a blow bottle.

### DESCRIPTION OF THE EMBODIMENTS

Examples of implementations for carrying out the present disclosure will be explained next in detail with reference to accompanying drawings. In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily.

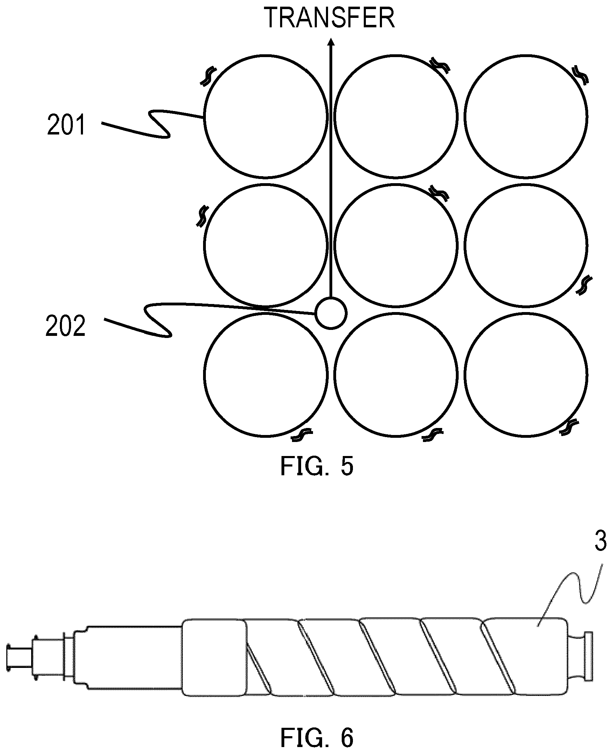

As described previously, it is considered that the wax mixed into the recycled styrene-based resin such as a MR-HIPS causes the chemical attack. As shown in FIG. 5, a wax 202 transfers to the surface of a bottle in the molding process of a toner bottle at which the temperature of a HIPS resin 201 becomes equal to or higher than the glass transition temperature. At the glass transition temperature of the HIPS resin 201, or higher, the HIPS resin 201 becomes vigorous in thermal motion. Then, the wax 202 transfers from the clearance of the HIPS resin 201 to the surface of the bottle.

Under such circumstances, the present inventors recognized the following. Even a stretch blow-molded article from a raw material including a material recycled polystyrene derived from a toner bottle requires the technology development for obtaining a stretch blow-molded article which is less likely to cause chemical attack on the toner in contact with the surface thereof. As a result of a continued study by the present inventors based on such recognition, they found that the following stretch blow-molded article is less likely to cause chemical attack on the toner in contact with the surface thereof.

Namely, a stretch blow-molded article in accordance with at least one aspect of the present disclosure comprises at least one selected from the group consisting of an inorganic layered double hydroxide and zeolite, a styrene-based resin, and a wax.

As a result of the study by the present inventors, they found the following. The presence of at least one selected from the group consisting of an inorganic layered double hydroxide and zeolite in a styrene-based resin comprising a wax can prevent the chemical attack. The reason for this can be considered as follows. At least one selected from the group consisting of an inorganic layered double hydroxide and zeolite (which will be also hereinafter referred to as zeolite, or the like) adsorbs the wax, which suppresses the transfer of the wax onto the surface of the toner bottle.

Particularly, a toner tends to be charged by friction with other members. For this reason, at least a part of the toner remaining in the toner bottle is considered to be charged with electric charges. Then, the state of the toner being charged with electric charges is considered to be kept even in a form of a MR-HIPS, and at least a part of the wax included in the MR-HIPS is also considered to be charged with electric charges. The wax thus charged with electric charges is considered to tend to be adsorbed by zeolite, or the like.

Therefore, the stretch blow-molded article, a molded article, or a pellet in accordance with the present disclosure comprises at least one selected from the group consisting of an inorganic layered double hydroxide and zeolite, a styrene-based resin, and a wax. The stretch blow-molded article can be obtained by, for example, stretch blow molding of a preform as a molded article molded from a resin mixture comprising at least one selected from the group consisting of an inorganic layered double hydroxide and zeolite, a styrene-based resin, and a wax.

### Preform

The preform for use in stretch blow molding preferably comprises at least the following (a), (b), and (c).
(a) a wax
(b) at least one selected from the group consisting of an inorganic layered double hydroxide and zeolite, and
(c) a styrene-based resin

Zeolite, or the like is covered with a skin layer of a styrene-based resin at the time of molding a preform of a bottle precursor, and is less likely to be precipitated to the surface of the bottle. This inhibits the adsorbed wax from transferring to the surface of the bottle. The effect tends to prevent the chemical attack by the wax.

A styrene-based resin comprises polystyrene. Examples thereof may include at least one selected from the group consisting of high impact polystyrene (HIPS), acrylonitrile styrene (AS), or various styrene-based alloys (PP/PS and PPE/PS) including polystyrene (GPPS) as the main raw material, and the like. The styrene-based resin preferably comprises an impact-resistant polystyrene HIPS.

The HIPS may be recycled HIPS such as a MR-HIPS, and may be a HIPS of a virgin material not reduced in molecular weight. However, the HIPS being a MR-HIPS resulting from recycle of a toner bottle allows the effect in accordance with the present disclosure to be remarkably produced. Therefore, a styrene-based resin is material recycled polystyrene, and preferably material recycled impact-resistant polystyrene.

### HIPS

For the impact-resistant polystyrene, namely, the HIPS, for example, the one obtained by mixing a rubber-like polymer or a rubber-like copolymer to polystyrene is preferably used. The rubber-like polymer or the rubber-like copolymer is preferably at least one polymer selected from the group consisting of polybutadiene, a styrenebutadiene copolymer, polyisoprene, a butadiene-isoprene copolymer, natural rubber, and an ethylene-propylene copolymer. Namely, the styrene-based resin may be a styrene-based resin composition including at least one selected from the group consisting of a rubber-like polymer and a rubber-like copolymer in addition to polystyrene. The total content ratio of the rubber-like polymer and the rubber-like copolymer in the styrene-based resin is preferably less than 50 mass%. For example, "FP120" (tradename, manufactured by TOYO STYRENE Co., Ltd.) or the like can be used.

Although the content of the styrene-based resin (e.g., HIPS) in the preform has no particular restriction, it is preferably 80 mass% or more, and more preferably 90 mass% or more based on the mass of the preform. Further, the content is preferably 99.9 mass% or less, and more preferably 99.5 mass% or less. Examples thereof may include the ranges of, preferably 80 to 99.9 mass%, and 90 to 99.5 mass%.

The melt flow rate (MFR) of a styrene-based resin is preferably 2.0 to 30.0 g/10 min, and more preferably 3.0 to 10.0 g/10 min at a temperature of 200°C under the measurement conditions according to Japanese Industrial Standards (JIS) K7210-1 : 2014. When the MFR is 2.0 g/10 min or more, the styrene-based resin tends to sufficiently fill at the time of molding the preform. When the MFR is 30.0 g/10 min or less, the shape of the preform tends to be kept.

### Inorganic Layered Double Hydroxide

A stretch blow-molded article, a molded article, and a pellet each comprise at least one selected from the group consisting of an inorganic layered double hydroxide and zeolite. Incidentally, the presence of the inorganic layered double hydroxide and zeolite in a stretch blow-molded article, the molded article, or the pellet can be confirmed by the measurement using a micro FT-IR.

Examples of the inorganic layered double hydroxide may include kaolin and mica. Examples of compounds which are more effective and easily available include hydrotalcites compounds represented by the following general formula (1). An inorganic layered double hydroxide preferably comprises a hydrotalcites compound.

General formula (1) : M²⁺_{(1-X)}M³⁺_{X}(OH)₂Aⁿ⁻_{(X/n)}·mH₂O

(where 0 < X ≤ 0.5, m ≥ 0, M²⁺; a divalent metal ion such as Mg²⁺ or Zn²⁺, M³⁺; a trivalent metal ion such as Al³⁺ or Fe³⁺, Aⁿ⁻; an n-valent anion such as CO₃²⁻, Cl⁻, or NO₃⁻, and n is an integer of 1 or more)

The hydrotalcites compound represented by the general formula (1) is a layered compound including a positively charged basic layer [M²⁺_{(1-X)}M³⁺_{X}(OH)₂]^{X+}, and a negatively charged intermediate layer [Aⁿ⁻_{(Xn)}·mH₂O]^{X-}, and can be considered to be an intercalation compound obtained by inserting the intermediate layer to the basic layer. Generally, the intercalation compound is known to exhibit a specific chemical property (reactivity). In the case of the hydrotalcites compound represented by the general formula (1), it is known that the anion (Aⁿ⁻) and the negative ion present at the ion intermediate layer are readily replaced (anion exchanged). Although the mechanism of anion exchange is not definite, it is presumed that the electric interaction (attraction) between the basic layer and an negative ion, the size of the void of the intermediate layer (the thickness of the intermediate layer), the adsorption action, and the like compositively act thereon.

In the general formula (1), preferably, the divalent metal ion M²⁺ is Mg²⁺, and the trivalent metal ion M³⁺ is Al³⁺. Further the n-valent anion is preferably CO₃²⁻ or Cl⁻.

The content of the inorganic layered double hydroxide is 0.09 to 1.2 mass%, and preferably 0.1 to 1.0 mass% based on the mass of the stretch blow-molded article, the molded article, or the pellet. When the content is 0.09 mass% or more, the wax can be more sufficiently adsorbed, so that the wax becomes less likely to transfer to the bottle surface. When the content is 1.2 mass% or less, at the time of blowing the preform, the inorganic layered double hydroxide is less likely to become the starting point of rupture. By setting the mixing amount within the foregoing range, it becomes easier to combine the chemical attack suppression and the blowability.

### Zeolite

Zeolite is a hydrous aluminosilicate including an alkali or alkaline-earth metal including a rigid negative ionic skeleton having a regular channel (tubular pore) and a cavity (hollow). Without particular restriction, natural or artificial (synthetic) one can be used.

Further, zeolite expressed by the following composition is preferable.

(M ^{I} ,M ^{II} _{1/2})ₘ(AlₘSiₙO₂₍ₘ₊ₙ₎) · ₓH₂O, (n≧m)

M ^{I} : Li⁺, Na⁺, K⁺, etc , M^{II}: Ca²+, Mg²+, Ba²+, etc

M^{I} is preferably Na⁺. M^{II} is preferably Ca²⁺. m is preferably 1 to 384. n is preferably 0 to 27.

Zeolites include zeolites having various skeleton structures. Namely, the skeleton structures of zeolite include a LTA type, a FER type, a MWW type, a MFI type, a MOR type, a LTL type, a FAU type, a BEA type, and the like certified by International Zeolite Association. In the present disclosure, although zeolite of any skeleton structure can be used, the MFI type is preferable. The MFI type (ZSM-5) is aluminosilicate zeolite having a skeleton structure in which pentacyl units whose chemical formula of the unit lattice is expressed by [NaₘAlₘSi₉₆₋ₘO_{192·}16H₂O (0 < m < 27)] are connected in a chain.

The content of zeolite is 0.09 to 1.2 mass%, and preferably 0.1 to 1.0 mass% based on the mass of the stretch blow-molded article (the molded article or the pellet). When the content is 0.09 mass% or more, the wax can be more sufficiently adsorbed, so that the wax becomes less likely to transfer to the surface of the bottle. When the content is 1.2 mass% or less, zeolite is less likely to become the starting point of rupture at the time of blowing the preform. By setting the mixing amount within the foregoing range, it becomes easier to combine the chemical attack suppression and the blowability.

From the viewpoint of combination of the chemical attack suppression and the blowability, the total content of the inorganic layered double hydroxide and zeolite is 0.09 to 1.2 mass%, and preferably 0.1 to 1.0 mass% based on the mass of the stretch blow-molded article (the molded article or the pellet).

The content ratio of the inorganic layered double hydroxide and zeolite in the stretch blow-molded article (the molded article or the pellet) can be measured by the following means. After measuring the mass of the stretch blow-molded article, the stretch blow-molded article is mounted in a container made of stainless steel, and then, is allowed to stand in a 480°C oven for 1 hour, thereby burning the resin of the blow-molded article. Subsequently, ion exchange water is placed in the container made of stainless steel including the residue therein. After sufficient stirring, filtration is performed by a nylon mesh with an opening size preventing the inorganic layered double hydroxide and zeolite from passing therethrough. The opening size may be selected in consideration of the sizes of other materials than the inorganic layered double hydroxide and zeolite. After filtration, the moisture is removed by a 100°C oven, and the mass is measured. The mass of the nylon mesh is subtracted therefrom. As a result, the content ratio can be measured. With this method, the catalyst, carbon black, and the like included in the resin pass through the nylon mesh. For this reason, it is possible to measure the content ratio of the inorganic layered double hydroxide and zeolite with precision. When the inorganic layered double hydroxide and zeolite cannot be separated only by filtration, the content can be measured by further combining known means.

The number-average particle diameter of the inorganic layered double hydroxide and zeolite is preferably 0.05 to 2.00 µm, and is more preferably 0.10 to 1.50 µm. A number-average particle diameter of 0.05 µm or more results in favorable dispersibility in the resin. A number-average particle diameter of 2.00 µm or less makes it difficult to form foreign matters in blow molding, which tends to suppress the rupture of the molded article.

### Wax

Waxes include the following ones. Examples thereof may include aliphatic hydrocarbon waxes such as low molecular weight polyethylene, low molecular weight polypropylene, a polyolefin copolymerized substance, polyolefin wax, microcrystalline wax, paraffin wax, and Fischer-Tropsch wax; oxides of aliphatic hydrocarbon wax such as polyethylene oxide wax; or block copolymerized substances thereof; plant type waxes such as Candelilla wax, Carnauba wax, Japan tallow, and jojoba wax; animal type waxes such as beeswax, lanoline, and spermaceti; mineral type waxes such as ozokerite, ceresin, and petrolatum; waxes including an aliphatic ester as the main component such as montanic acid ester wax and castor wax; and those obtained by deoxidizing a part of, or the whole of an aliphatic ester such as deoxidized Carnauba wax.

Further, examples may include saturated straight chain fatty acids such as palmitic acid, stearic acid, montanic acid, or long chain alkyl carboxylic acids having a further long chain alkyl group; unsaturated fatty acids such as brassidic acid, eleostearic acid, and parinaric acid; saturated alcohol such as stearyl alcohol, eicosyl alcohol, behenyl alcohol, carnaubyl alcohol, ceryl alcohol, melissyl alcohol, or alkyl alcohol having a further long chain alkyl group; polyhydric alcohol such as sorbitol; aliphatic amides such as linolic acid amide, oleic acid amide, and lauric acid amide; saturated aliphatic bisamides such as methylene bisstearic acid amide, ethylene biscapric acid amide, ethylene bislauric acid amide, and hexamethylene bisstearic acid amide; unsaturated fatty acid amides such as ethylene bisoleic acid amide, hexamethylenebis oleic acid amide, N,N'-dioleyl adipic acid amide, and N,N'-dioleyl sebacic acid amide; aromatic-based bisamides such as m-xylene bisstearic acid amide and N,N'-distearyl isophthalic acid amide; fatty acid metal salts (those generally referred to as metal soap) such as calcium stearate, calcium laurate, zinc stearate, and magnesium stearate; waxes obtained by grafting aliphatic hydrocarbon waxes using a vinyl-based monomer such as styrene or acrylic acid; partially esterified products of fatty acid and polyhydric alcohol such as monoglyceride behenate; and a methyl ester compound having a hydroxyl group obtained by hydrogenating plant oils and fats.

Further, those obtained by making the molecular weight distribution of the waxes sharp using the press sweating method, the solvent method, the recrystallization method, the vacuum distillation method, the supercritical gas extraction method, or the melt crystallization method are preferably used. Alternatively, those obtained by removing the low molecular weight solid fatty acid, the low molecular weight solid alcohol, the low molecular weight solid compound, and other impurities are also preferably used.

The presence of the wax in the stretch blow-molded article (the molded article or the pellet) can be confirmed by GPC-FTIR.

Specific examples of the wax may include VISKOL (registered trademark) 330-P, 550-P, 660-P, and TS-200 (manufactured by Sanyo Chemical Industries, Ltd.), Hi-WAX 400P, 200P, 100P, 410P, 420P, 320P, 220P, 210P, and 110P (MITSUI CHEMICAL Inc.), SASOL H1, H2, C80, C105, and C77 (Schumann Sasol Co.), HNP-1, HNP-3, HNP-9, HNP-10, HNP-11, and HNP-12 (NIPPON SEIRO CO., LTD.), UNILIN (registered trademark) 350, 425, 550, and 700, UNICID (registered trademark) 350, 425, 550, and 700 (TOYO PETROLITE CO.), Japan tallow, beeswax, rice wax, Candelilla wax, and Carnauba wax (available at CERARICA NODA CO., LTD.).

Examples of the content ratio of the wax in the stretch blow-molded article (the molded article or the pellet) may include 0.001 to 0.100 mass%, 0.002 to 0.050 mass%, and 0.002 to 0.030 mass% based on the mass of the stretch blow-molded article (the molded article or the pellet). When the content ratio of the wax falls within the foregoing range, it is possible to prevent the wax from affecting the stretch blow moldability of the preform with more reliability.

Incidentally, the quantification of the presence of the wax in the resin molded article can be attained by the measurement using, for example, pyrolysis GC/MS.

In the stretch blow-molded article (the molded article or the pellet), the total content of the inorganic layered double hydroxide and zeolite relative to 100 parts by mass of the wax is preferably 400 to 5000 parts by mass, and more preferably 450 to 4600 parts by mass.

The stretch blow-molded article (the molded article or the pellet) may comprise carbon black. For example, for appearance reason, carbon black may be added to the stretch blow-molded article. Examples of the content (mixing amount) of the carbon black in the stretch blow-molded article (the molded article or the pellet) may include 0.01 to 0.20 mass% and 0.02 to 0.10 mass%.

### Manufacturing of Stretch Blow-molded Article

Then, one aspect of the method for manufacturing a stretch blow-molded article such as a toner bottle by 2-axis stretch blow molding will be described below. The method for manufacturing a stretch blow-molded article has a step of preparing a preform comprising at least one selected from the group consisting of an inorganic layered double hydroxide and zeolite, a styrene-based resin, and a wax, and a molding step of subjecting the preform to stretch blow molding, and obtaining a stretch blow-molded article.

First, an example of the method for manufacturing a pellet to serve as a material for a preform to be used for subjecting the stretch blow-molded article to 2-axis stretch blow molding will be shown. For example, at the step of preparing the preform, at least one selected from the group consisting of an inorganic layered double hydroxide and zeolite, a styrene-based resin, and a wax are melt-kneaded to mold a pellet. Molding into a pellet makes the material composition uniform, which facilitates molding.

The wax may be a toner comprising a wax. More specifically, at least one selected from the group consisting of an inorganic layered double hydroxide and zeolite, a styrene-based resin, and an electrophotographic toner comprising a wax are melt-kneaded to be molded into a pellet.

The following is also acceptable. In advance, at least one selected from the group consisting of an inorganic layered double hydroxide and zeolite is mixed, or melt-kneaded with a styrene-based resin, thereby obtaining a styrene-based resin composition. A toner comprising a wax is mixed or melt-kneaded therewith.

Furthermore, for example, a toner bottle comprising a styrene-based resin with an electrophotographic toner comprising a wax adhered thereto may be used. Namely, the step of preparing a preform preferably has a step of crushing a recycled toner bottle with an electrophotographic toner adhered thereto, and obtaining a crushed article, a step of melt-kneading at least one selected from the group consisting of an inorganic layered double hydroxide and zeolite, and the crushed article, and forming a pellet, and a step of forming the preform from the formed pellet. Then, preferably, the electrophotographic toner comprises a wax, and the toner bottle comprises a styrene-based resin.

The amount of the electrophotographic toner is preferably 0.100 to 1.000 mass%, and more preferably 0.150 to 0.500 mass% based on the total amount of the toner bottle and the electrophotographic toner adhered to the toner bottle.

The means of melt-kneading has no particular restriction, and a known means such as a 2-axis extruding machine can be adopted. The temperature for melt-kneading may only allow melt-kneading of a styrene-based resin, and has no particular restriction. The temperature is, for example, 120 to 300°C, and preferably 180 to 240°C. The conditions for melt-kneading also have no particular restriction. After melt-kneading, cooling is performed, and the melt-kneaded product may be molded into an injection moldable pellet shape using a known means such as a pelletizer.

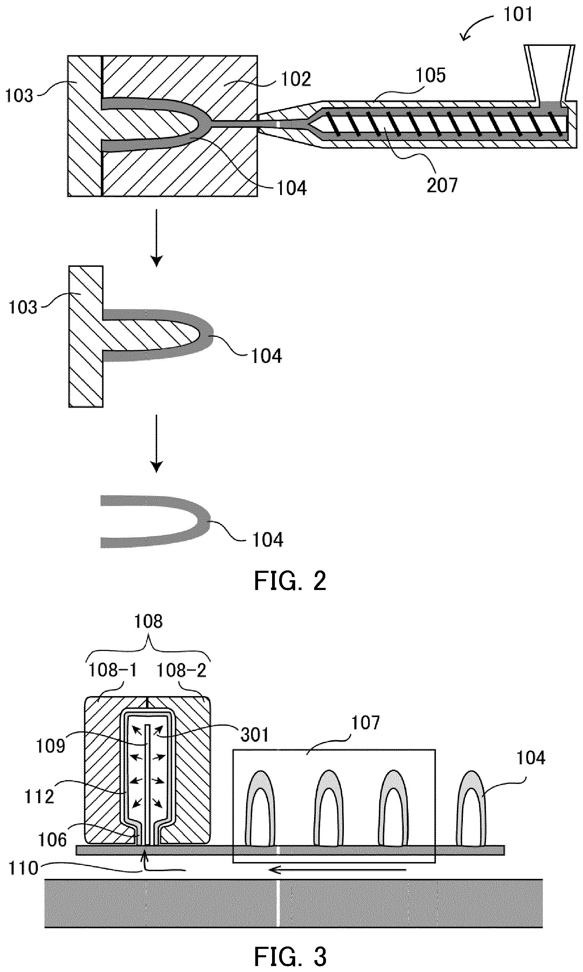

Then, using the obtained pellet, as shown in FIG. 2, a preform 104 having a test tube shape is molded by injection molding. Specifically, a heating cylinder 105 heats the material charged into an injection molding machine 101, and renders the material into a molten state. An extrusion screw 207 injects the material rendered in a molten state into preform molds 102 and 103. The material was cooled, and then, was removed from the molds, resulting in a preform 104. At the step of preparing a preform, a preform is preferably obtained from the resulting pellet by injection molding. Further, the preform preferably has a test tube shape.

Then, the molding step will be described. At the molding step, as shown in FIG. 3, 2-axis stretch blowing (2-axis stretch molding) of the preform 104 is performed. First, the preform 104 is placed in a heating furnace 107, and is heated to a temperature allowing stretching. The heated preform 104 is taken out from the heating furnace 107, and is arranged at the mouth part of a blow mold 108 including a cavity formed in the inside by combining a left-side mold 108-1 and a right-side mold 108-2.

Incidentally, the preform 104 is preferably set at the mouth part of the blow mold in a short time (e.g., in 10 seconds) so as to prevent the temperature of the heated preform 104 from being reduced until the start of the 2-axis stretching step.

The heated preform 104 set in the blow mold 108 is stretched in the longitudinal direction using a stretching rod 109. The stretching is referred to as the primary stretching. For primary stretching, a gas is preferably flowed so that the preform 104 may not come in contact with the stretching rod 109. The pressure of the gas at this step is referred to as a primary blow pressure.

After performing the primary stretching, a gas 110 is flowed from a preform mouth part 106, and the preform 104 is swollen in the transverse direction (circumferential direction). This is referred to as the secondary stretching. Further, the pressure of the gas at this step is referred to as a secondary blow pressure. Examples of the gas to be flown may include air, nitrogen, carbon dioxide, and argon.

By performing the primary stretching and the secondary stretching, the preform 104 is swollen in each direction indicated with an arrow 301, comes in close contact with the inner wall of the blow mold 108, and is cooled and solidified in that state, resulting in a blow-molded article 112. The molding step preferably has a step of stretching the preform 104 in the longitudinal direction of the preform 104 using a stretching rod, and a step of flowing a gas into the preform 104 stretched in the longitudinal direction, and stretching the preform 104 in the circumferential direction of the preform 104.

Then, by separating the left-side mold 108-1 and the right-side mold 108-2 of the blow mold 108, the blow-molded article 112 is taken out from the blow mold 108. The blow-molded article 112 is stretched in both the vertical and transverse directions, and hence becomes a molded article with high strength.

Thus, at the stretching step of injection stretch blow molding, the preform is preferably not crystallized (in an amorphous state). When the blow molding temperature is achieved in an amorphous state, by performing blowing, namely, 2-axis stretch molding as it is, the resin is stretched and crystallized in the stretched direction. This enables the formation of a bottle with high strength.

The injection stretch blow molding methods include the 1-stage method and the 2-stage method. The 1-stage method is the method in which stretch blow molding is performed using the remaining heat of the preform immediately after taking out of the mold as it is, or with heat regulation. The 2-stage method is the method in which the preform is once cooled to room temperature, and then, the preform is regulated in temperature again for performing stretch blow molding.

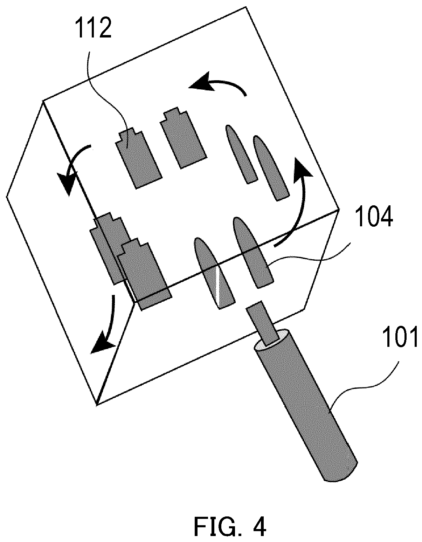

With the 1-stage method, as shown in FIG. 4, after subjecting the preform 104 to injection molding from the injection molding machine 101, cooling is terminated in a time as short as 10 seconds or less at the time of injection molding so as to prevent the temperature of the preform 104 from becoming equal to, or lower than the glass transition temperature of the styrene-based resin. Then, immediately, heat keeping and heating to the blow molding temperature (e.g., from 90°C to 120°C) are performed, and blow molding is performed, resulting in a blow bottle 112. An apparatus including an injection molding device and a blow molding device integrated therein is used.

The 2-stage method is the method in which after subjecting the preform to injection molding, the preform is cooled to the glass transition temperature of the styrene-based resin, or lower, and is taken out, subsequently, heating is performed to the blow molding temperature (e.g., from 90°C to 120°C) with another blow molding device for performing blow molding. An apparatus including an injection molding device and a blow molding device separately is used. For example, after molding the preform at the step of preparing the preform, the preform is cooled to the glass transition temperature of a styrene-based resin or lower. Then, the molding step is carried out.

The 1-stage method is preferable in that less energy for reheating is required as with the 2-stage method because the preform is not cooled to the glass transition temperature or lower.

Then, a description will be given to the method for confirming the chemical attack at the toner bottle obtained by the 2-axis stretch blow molding.

A toner is accommodated in the toner bottle obtained by the 2-axis stretch blow molding. The toner bottle including the toner accommodated therein is allowed to stand under usage environment. For the evaluation of the chemical attack, the usage environment was set at 50°C for 72 hours, and the toner bottle was allowed to stand in a thermostat for test. The toner bottle exposed under the usage environment was taken out, and the toner adhered to the bottle inside surface of the toner accommodated in the toner bottle is taken out. When the tonner accommodation port of the bottle is turned upside down, to discharge the toner from the bottle, and the toner adhered to the bottle inside surface is adhered by an sticky tape, or the like, the toner can be readily drawn out. The drawn toner is observed with an electron microscope, or the like, so that the deformation of the toner particle surface is observed. As a result, for a toner particle performing chemical attack, the mark of deformation can be observed at the contact surface with the toner bottle.

### Image Forming Apparatus

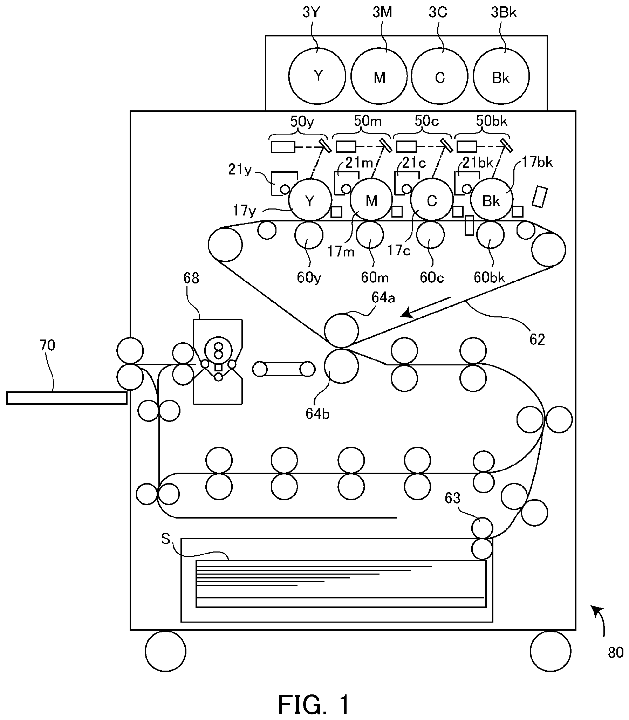

An image forming apparatus will be explained below next with reference to accompanying drawings. FIG. 1 is a schematic configuration explanatory diagram illustrating an electrophotographic four-color image forming apparatus where the reference symbol 80 denotes the main body of the image forming apparatus. The image forming apparatus 80 is configured as an image forming apparatus of so-called intermediate transfer tandem type in which four color image forming sections are arranged side by side on an intermediate transfer belt.

The image forming apparatus 80 carries out image formation as follows. In the image forming apparatus 80, respective electrostatic latent images are formed first on photosensitive drums 17 (17y, 17m, 17c, 17bk) by exposure devices 50 (50y, 50m, 50c, 50bk) on the basis of print data. In the image forming apparatus 80 the formed electrostatic latent images are developed by respective developing apparatuses 21 (21y, 21m, 21c, 21bk), to form respective toner images.

In the image forming apparatus 80, the toner images are transferred onto an intermediate transfer body 62 by primary transfer devices 60 (60y, 60m, 60c, 60bk), whereupon a resulting toner image is transferred, in a secondary transfer section 64 (64a, 64b), onto a sheet material S that is supplied from a paper feeding device 63. In the image forming apparatus 80, the toner image transferred onto the sheet S is fixed on the sheet material S by a fixing means 68, followed by discharge onto a paper discharge tray 70.

In the image forming apparatus 80, where toner images are formed by the developing apparatuses 21, detachable toner bottles 3 (3Y, 3M, 3C, 3Bk) are used for the purpose of supplying respective toners to the developing apparatuses 21. The toner bottle according to at least one aspect of the present disclosure is used thus in the above manner.

A toner bottle comprises at least one selected from the group consisting of an inorganic layered double hydroxide and zeolite; a styrene-based resin; and a wax. Examples

Below, by way of Examples and Comparative Examples, the present disclosure will be described in details. However, the present disclosure is not limited to the Examples. In the following Examples and Comparative Examples, "%" means "mass%" unless otherwise specified.

### Manufacturing of Toner Bottle

Using a 1-stage process blow molding device (ASB-70DPH manufactured by NISSEI ASB MACHINE CO., LTD.), a toner bottle 3 (with a total length of 439.5 mm, and a diameter of 101 mm) shown in FIG. 6 was manufactured. The blow stretch ratio was set at "vertical ratio x transverse ratio = 6.7".

The "vertical ratio" of the blow stretch ratio is the value calculated by dividing the "total length after stretching" by the "total length (before stretching) of the portion (the heating part) of the preform to reach the stretching temperature".

The "transverse ratio" of the blow stretch ratio is the value calculated by dividing the "diameter of the intermediate portion after stretching" by the "diameter of the intermediated portion (before stretching) of the preform".

First, the materials described in the following Table 1 were melt-kneaded, followed by pelletization, thereby preparing a master batch with a carbon black concentration of 5 mass%.

**[Table 1]**

| Material | Mixing ratio |
|---|---|
| Carbon black (Tradename: MA-100; manufactured by Mitsubishi Chemical Corporation) | 5 mass% |
| HIPS (Tradename: FP120; manufactured by TOYO STYRENE Co., Ltd.) | 95 mass% |

Then, the master batch with a carbon black concentration of 5 mass% prepared as described above and HIPS were mixed in the ratio of the following Table 2, and the resulting mixture was melt-kneaded, followed by pelletization, resulting in a pellet of a resin mixture.

**[Table 2]**

| Material | Mixing ratio |
|---|---|
| Carbon black concentration 5% master batch | 1.4 mass% |
| HIPS (Tradename: FP120; manufactured by TOYO STYRENE Co., Ltd.) | 98.6 mass% |

### Blow Molding Conditions

Pellets of the resin mixture dried as described above were charged into an injection molding apparatus of a one-step stretch blow molding machine (product name: ASB-70DPH; by Nissei ASB Machine Co., Ltd.), and biaxial stretch blow molding was carried out, to mold a toner bottle. The above one-step stretch blow molding machine sequentially executes a step of obtaining a test tube-shaped preform by injection molding, and a step of subjecting the preform to biaxial stretch blow molding, to yield a bottle-shaped molded article (single-stage method). The screw diameter of the injection molding machine in the molding machine was 54 mm.

As a preform molding mold there was prepared first a mold capable of molding a preform having an outer diameter of 30 mm, a wall thickness of 3.7 mm, and a length of 220 mm. A preform was then molded under the following molding conditions.
- Screw diameter: 54 mm
- Screw position prior to filling of resin mixture into cavity: 95 mm
- Injection speed
   Up to 5 mm of screw advance: 50% of maximum speed
   Up to 20 mm of further screw advance: 30% of maximum speed
   Up to 35 mm of further screw advance: 25% of maximum speed
   PV switch position: 35 mm
- Injection pressure
   - Up to PV switch: 12.0 MPa
   - After pV switch: 4.5 MPa (pressure holding)
- Pressure holding time after PV switch
   - 4.57 seconds
- Heating cylinder temperature: 230°C
- Cooling time: 8.0 seconds
- Mold temperature: 18°C

Once a cooling time of 8.0 seconds had elapsed, the preform was thereafter demolded and was conveyed to a biaxial stretch blow station of the one-step stretch blow molding machine. The temperature of the preform during conveyance was controlled as follows.
- Preform heating temperature
   10% of the total length of the preform from the top thereof: 190°C
   25% of the total length of the preform from the top thereof: 210°C
   50% of the total length of the preform from the top thereof: 210°C
   75% of the total length of the preform from the top thereof: 190°C

The preform adjusted to the above temperature was set in a cylindrical mold having a size corresponding to the size of the toner bottle and having been adjusted to a temperature of 18°C, and biaxial stretch blow molding was carried out thereupon, to produce a blow bottle. The preform being transported was heated, whereby the surface temperature of the center of the preform immediately prior to entering the cylindrical mold was 110°C.

Firstly, the stretching rod was inserted from a retracted position into the preform, through the opening of the preform, and was driven forward until coming into contact with the apex of the preform. The air pressure for driving the stretching rod was set to 1.2 MPa, whereupon the stretching rod was further driven forward. Next, primary air was introduced into the preform through the opening thereof 0.5 seconds after the start of this further advancement of the stretching rod. The pressure of the primary air was set to 1.0 MPa. Secondary air was subsequently introduced 0.15 seconds after the introduction of the primary air. The pressure of the secondary air was set to 2.9 MPa. Air was introduced into the preform over 7.0 seconds, from the start of introduction of primary air. The pressure inside the preform was then reverted to normal pressure over 2.5 seconds. A toner bottle produced by blow molding was thus obtained. This bottle is a toner bottle of unrecycled virgin HIPS.

According to the above method, 200 toner bottles using virgin HIPS were prepared.

### Example 1-1

### Manufacturing of Recycle Pellet

Two hundred unused toner cartridges (tradename: Toner NPG-26; manufactured by CANON INC.) filled with a black toner were prepared. The black toner includes a wax. The total amount of the black toner in respective toner cartridges was transferred to the 200 toner bottles prepared as described above. Thereafter, the opening of the toner bottle was pointed vertically downward, thereby discharging the black toner in the inside thereof. Also after this operation, a small amount of the black toner was adhered to the inner wall of each of the toner bottles. At this step, the black toner left in the toner bottle was in an amount of 0.321 mass% based on the mass of the toner bottle main body in terms of the average value of those of the 200 toner bottles. Incidentally, herein, the mass of the toner bottle main body is the mass of the toner bottle and only the toner left in the inside thereof after removing all the supply components and the like mounted in the toner bottle.

Then, each of the toner bottles was crushed to a size of about 5 to 10 mm square using a crusher, resulting in a crushed article (which will be also hereinafter referred to as a "flake product"). For the obtained flake product, the wax content was measured using a GPC, and a FT-IR, and was found to be 0.022 parts by mass for every 100 parts by mass of the flake product.

To 99.5 mass% of the flake product, a hydrotalcites compound (tradename: DHT-4C; manufactured by Kyowa Chemical Industry Co., Ltd.) was added in an amount of 0.5 mass% as an inorganic layered double hydroxide, and the resulting mixture was melt-kneaded using a 2-axis extruding machine (PC-46 manufactured by IKEGAI Co., Ltd.) at a temperature of 210°C, a screw rotation speed of 200 rpm, and a discharge rate of 50 kg/h, followed by pelletization. The inorganic layered double hydroxide herein used was in a filler shape, and had a number-average particle diameter of 0.38 µm. (The recycled material is referred to as a MR-HIPS (1-1)).

### Manufacturing of Blow Bottle

The MR-HIPS (1-1) was charged into the one step stretch blow molding machine, and 2-axis stretch blow molding was performed in the same manner as the blow molding conditions (the resultant toner bottle is referred to as a toner bottle (1-1)). A toner was accommodated in the toner bottle (1-1), so that a confirmation test of chemical attack was carried out under environment of at 50°C and for 72 hours. As a result, even when the toner adhered to the inside surface of the toner bottle was observed, no deformation of the toner particle surface was confirmed.

Blow molding was performed in the same manner as in Example 1-1, except that the mixing ratios of the flake product and the inorganic layered double hydroxide (hydrotalcites compound) were changed as shown in Table 3 in Example 1-1, resulting in toner bottles (1-2) and (1-3), and a comparative toner bottle (1-4). All the toner bottles could be blow molded without a problem.

For each of the obtained toner bottles, the deformation of the toner particle surface was observed in the same manner as in Example 1-1.

**[Table 3]**

| | Mixing ratio (mass%) | | Content of inorganic layered double hydroxide relative to 100 parts by mass of wax (parts by mass) | Blow moldability | Occurrence or non-occurrence of chemical attack |
|---|---|---|---|---|---|
| | Flake product | Inorganic layered double hydroxide | | | |
| Toner bottle No. | | | | | |
| 1-1 | 99.5 | 0.5 | 2269 | OK | Not observed |
| 1-2 | 99.0 | 1.0 | 4560 | OK | Not observed |
| 1-3 | 99.9 | 0.1 | 452 | OK | Not observed |
| 1-4 | 100.0 | 0.0 | 0 | OK | Observed |

### Toner Bottle (1-2)

The 2-axis stretch blow molding of the preform was performed in an amount of an inorganic layered double hydroxide to be added of 1.0 mass%. As a result, blow molding was possible without a problem. Using the toner bottle (1-2), evaluation of the chemical attack was performed. As a result, even when the toner adhered to the inside surface of the toner bottle was observed, no deformation of the toner particle surface was confirmed.

### Toner Bottle (1-3)

The 2-axis stretch blow molding of the preform was performed in an amount of an inorganic layered double hydroxide to be added of 0.1 mass%. As a result, blow molding was possible without a problem. Using the toner bottle (1-3), evaluation of the chemical attack was performed. As a result, even when the toner adhered to the inside surface of the toner bottle was observed, no deformation of the toner particle surface was confirmed.

### Comparative Toner Bottle (1-4)

The 2-axis stretch blow molding of the preform was performed in an amount of an inorganic layered double hydroxide to be added of 0.0 mass%. As a result, blow molding was possible without a problem. Using the comparative toner bottle (1-4), evaluation of the chemical attack was performed. As a result, the deformation of the surface of the toner particle adhered to the inside surface of the toner bottle was confirmed, and chemical attack occurred. The reason for this is considered as follows. When an inorganic layered double hydroxide is not added, the wax causing chemical attack is not adsorbed by the inorganic layered double hydroxide, and hence the wax transfers to the inside surface of the toner bottle. As a result, chemical attack occurs.

### Example 2-1

### Manufacturing of Recycled Pellet

Zeolite (tradename: SILTON MT-8000; manufactured by Mizusawa Industrial Chemicals, Ltd.) was added in an amount of 0.5 mass% to 99.5 mass% of the flake product prepared in the same manner as in Example 1-1, and the resulting mixture was melt-kneaded at a temperature of 230°C, a screw rotation speed of 200 rpm, and a discharge amount of 50 kg/h using a 2-axis extruding machine (PC-46 manufactured by IKEGAI Co., Ltd.), followed by pelletization. The zeolite herein used was in a filler shape. (The recycled material is referred to as a MR-HIPS (2-1)).

### Manufacturing of Blow Bottle

A MR-HIPS (2-1) was charged into the one step stretch blow molding machine, and 2-axis stretch blow molding was performed in the same manner as under the blow molding conditions (the obtained toner bottle is referred to as a toner bottle (2-1)). A toner was accommodated in the toner bottle (2-1), and the confirmation test of the chemical attack was carried out under environment of at 50°C and for 72 hours. As a result, even when the toner adhered to the inside surface of the toner bottle was observed, the deformation of the toner particle surface was not confirmed.

Blow molding was performed in the same manner as in Example 2-1, except for changing the mixing ratios of the flake product and zeolite as shown in Table 4 in Example 2-1, resulting in toner bottles (2-2) and (2-3), and a comparative toner bottle (2-4). All of the toner bottles could be blow molded without a problem.

For each of the obtained toner bottles, the deformation of the toner particle surface was observed in the same manner as in Example 2-1.

**[Table 4]**

| Toner bottle No. | Mixing ratio (mass%) | | Content of zeolite relative to 100 parts by mass of wax (parts by mass) | Blow moldability | Occurrence or non-occurrence of chemical attack |
|---|---|---|---|---|---|
| | Flake product | Zeolite | | | |
| 2-1 | 99.5 | 0.5 | 2269 | OK | Not observed |
| 2-2 | 99.0 | 1.0 | 4560 | OK | Not observed |
| 2-3 | 99.9 | 0.1 | 452 | OK | Not observed |
| 2-4 | 100.0 | 0.0 | 0 | OK | Occurred |

### Toner Bottle (2-2)

The 2-axis stretch blow molding of the preform was performed in an amount of zeolite to be added of 1.0 mass%. As a result, blow molding was possible without a problem. Using the toner bottle (2-2), evaluation of the chemical attack was performed. As a result, even when the toner adhered to the inside surface of the toner bottle was observed, the deformation of the toner particle surface was not confirmed.

### Toner Bottle (2-3)

The 2-axis stretch blow molding of the preform was performed in an amount of zeolite to be added of 0.1 mass%. As a result, blow molding was possible without a problem. Using the toner bottle (2-3), evaluation of the chemical attack was performed. As a result, even when the toner adhered to the inside surface of the toner bottle was observed, the deformation of the toner particle surface was not confirmed.

### Comparative Toner Bottle (2-4)

The 2-axis stretch blow molding of the preform was performed in an amount of zeolite to be added of 0.0 mass%. As a result, blow molding was possible without a problem. Using the comparative toner bottle (2-4), evaluation of the chemical attack was performed. As a result, deformation was confirmed on the surface of the toner particle adhered to the inside surface of the toner bottle, and chemical attack occurred. The reason for this is considered as follows. When zeolite is not added, the wax causing chemical attack is not adsorbed by zeolite. For this reason, the wax transfers to the inside surface of the toner bottle, so that chemical attack occurs.

## Claims

1. A stretch blow-molded article comprising:
at least one selected from the group consisting of an inorganic layered double hydroxide and zeolite;
a styrene-based resin; and
a wax; wherein
a total content of the inorganic layered double hydroxide and the zeolite is 0.09 to 1.2 mass% based on a mass of the stretch blow-molded article,
the styrene-based resin is material recycled polystyrene, and
the stretch blow-molded article is a toner bottle.

2. The stretch blow-molded article according to claim 1, wherein
the inorganic layered double hydroxide comprises a hydrotalcites compound.

3. The stretch blow-molded article according to claim 1 or 2, wherein
the styrene-based resin comprises an impact-resistant polystyrene.

4. A method for manufacturing the stretch blow-molded article according to any one of claims 1 to 3, the method comprising:
a step of preparing a preform comprising at least one selected from the group consisting of the inorganic layered double hydroxide and the zeolite, the styrene-based resin, and the wax; and
a molding step of subjecting the preform to stretch blow molding, and obtaining the stretch blow-molded article; wherein
the step of preparing the preform has:
a step of crushing a recycled toner bottle with an electrophotographic toner adhered thereto, and obtaining a crushed article;
a step of melt-kneading at least one selected from the group consisting of the inorganic layered double hydroxide and the zeolite, and the crushed article, and forming a pellet; and
a step of forming the preform from the formed pellet, wherein
the electrophotographic toner comprises the wax, and
the toner bottle comprises the styrene-based resin.

## Patentansprüche

1. Streckblasgeformter Artikel, umfassend:
zumindest eines ausgewählt aus der Gruppe bestehend aus einem anorganischen geschichteten Doppelhydroxid und Zeolith;
ein styrolbasiertes Harz; und
ein Wachs; wobei
ein Gesamtgehalt des anorganischen geschichteten Doppelhydroxids und des Zeoliths 0,09 Masse-% bis 1,2 Masse-%, basierend auf der Masse des streckblasgeformten Artikels, ist,
das styrolbasierte Harz ein Polystyrol-Recyclingmaterial ist, und
der streckblasgeformte Artikel eine Tonerflasche ist.

2. Der streckblasgeformte Artikel nach Anspruch 1, wobei
das anorganische geschichtete Doppelhydroxid eine Hydrotalcitverbindung umfasst.

3. Streckblasgeformter Artikel nach Anspruch 1 oder 2, wobei
das styrolbasierte Harz ein schlagfestes Polystyrol umfasst.

4. Verfahren zur Herstellung des streckblasgeformten Artikels nach einem der Ansprüche 1 bis 3, das Verfahren umfassend:
einen Schritt des Zubereitens einer Vorform, umfassend zumindest eines aus der Gruppe bestehend aus dem anorganischen geschichteten Doppelhydroxid und dem Zeolith, das styrolbasierte Harz und das Wachs; und
einen Formungsschritt des Unterwerfens der Vorform dem Streckblasformen, und Erhalten des streckblasgeformten Artikels; wobei
der Schritt des Zubereitens der Vorform aufweist:
einen Schritt des Zerkleinerns einer recycelten Tonerflasche mit einem elektrofotografischen Toner, der daran haftet, und Erhalten eines zerkleinerten Artikels;
einen Schritt des Schmelzknetens zumindest eines ausgewählt aus der Gruppe bestehend aus dem anorganischen geschichteten Doppelhydroxid und dem Zeolith, und dem zerkleinerten Artikel, und Bilden eines Pellets; und
einen Schritt des Bildens der Vorform aus dem gebildeten Pellet, wobei
der elektrofotografische Toner das Wachs umfasst, und
die Tonerflasche das styrolbasierte Harz umfasst.

## Revendications

1. Article moulé par étirage-soufflage comprenant :
au moins un élément choisi dans le groupe comprenant un hydroxyde double lamellaire inorganique et de la zéolite ;
une résine à base de styrène ; et
une cire ; dans lequel :
une teneur totale de l'hydroxyde double lamellaire inorganique et de la zéolite est de 0,09 à 1,2 % en masse basée sur une masse de l'article moulé par étirage-soufflage,
la résine à base de styrène est du polystyrène recyclé, et
l'article moulé par étirage-soufflage est une bouteille d'encre en poudre.

2. Article moulé par étirage-soufflage selon la revendication 1, dans lequel l'hydroxyde double lamellaire inorganique comprend un composé d'hydrotalcites.

3. Article moulé par étirage-soufflage selon la revendication 1 ou 2, dans lequel la résine à base de styrène comprend un polystyrène choc.

4. Procédé de fabrication de l'article moulé par étirage-soufflage selon l'une quelconque des revendications 1 à 3, le procédé comprenant :
une étape consistant à préparer une préforme comprenant au moins un élément choisi dans le groupe comprenant l'hydroxyde double lamellaire inorganique et la zéolite, la résine à base de styrène et la cire ; et
une étape de moulage consistant à soumettre la préforme à un moulage par étirage-soufflage, et à obtenir l'article moulé par étirage-soufflage ;
dans lequel l'étape de préparation de la préforme comporte :
une étape consistant à broyer une bouteille d'encre en poudre recyclée sur laquelle adhère une encre électrophotographique, et à obtenir un article broyé ;
une étape de malaxage à l'état fondu d'au moins un élément choisi dans le groupe comprenant l'hydroxyde double lamellaire inorganique et la zéolite, et de l'article broyé, et de formation d'un granulé ; et
une étape consistant à former la préforme à partir du granulé formé, dans laquelle :
l'encre électrophotographique comprend la cire, et
la bouteille d'encre en poudre comprend la résine à base de styrène.
